Europäisches Patentamt

(19) European Patent Office

Office européen des brevets

(11) Publication number: **0 075 429**
**A2**

(12) # EUROPEAN PATENT APPLICATION

(21) Application number: **82304826.9**

(22) Date of filing: **13.09.82**

(51) Int. Cl.³: **A 23 L 2/26,** A 23 L 2/00,
A 23 L 2/40

(30) Priority: **14.09.81 US 301621**

(43) Date of publication of application: **30.03.83**
**Bulletin 83/13**

(84) Designated Contracting States: **DE GB IT NL**

(71) Applicant: **PHILIP MORRIS INCORPORATED, 100 Park
Avenue, New York, New York 10017 (US)**

(72) Inventor: **Lendvay, Andrew Thomas, 2916 Halstead
Road, Richmond Virginia 23235 (US)**

(74) Representative: **Bass, John Henton et al, REDDIE &
GROSE 16 Theobalds Road, London WC1X 8PL (GB)**

(54) **Dry phosphoric acid composition.**

㊿ Phosphoric acid is prepared in the form of substantially dry, pourable fine granules for instant beverage mixes as an acidulant. The composition comprises not more than 75% by weight orthophosphoric acid, together with one or more compounds of calcium and/or magnesium that are capable of forming corresponding phosphates. It can be made by mixing the constituents and removing water until the composition behaves as though dry. Such free-flowing acidic material dissolves quickly and completely in water, which may also be flavoured and carbonated.

- 1 -

DRY PHOSPHORIC ACID COMPOSITION

Background of the Invention

Dry beverage mixes have been made with solid food acids such as citric, malic or the like.

In certain beverages, such as colas, acidification with phosphoric acid is customary. It is known that phosphoric acid (orthophosphoric acid) is particularly suitable for this purpose:

a. in dilute solution it is non-toxic,

b. it is relatively inexpensive, and

c. it imparts a certain desirable flavour beyond the sour note arising from acidity.

The addition of liquid phosphoric acid presents no problem in the formulations of bottled or canned beverages. When formulation of a dry powder concentrate is needed for "instant beverage" preparations, however, the incorporation of liquid phosphoric acid would result in a pasty consistency or cause clumping and the acid would tend to react with sugars or other flavour ingredients, possibly dehydrating or charring them.

It has been disclosed by Kennedy in US 3 966 994, that a satisfactory dry instant beverage mix incorporating phosphoric acid has been made by adding to the composition, before final drying, an amount of monoalkali phosphate at least equivalent to the phosphoric acid content. (As is well known, members of the alkali group are: lithium, sodium, potassium, rubidium, and cesium). For practical reasons only mono-sodium or mono-potassium phosphate could be applied as mono-alkali phosphate. A shortcoming of this composition is that both alkali salts impart a strong saline note to the flavour and the potassium salt additionally may impart bitterness.

Mitchell et al, US 4 022 924, disclose dry, free-flowing powders containing liquid acid such as phosphoric acid. The compositions contain as a carrier certain dextrins and are said to have a reduced tendency to the browning reaction. Not only is browning still possible with these compositions, but also great care in the preparation is necessary to avoid more serious discolouration.

## Brief Description of the Invention

Surprisingly it has been found that salts of calcium or magnesium are eminently more suitable to be applied as adsorbents and carriers of phosphoric acid to be dehydrated, resulting in substantially dry, free-flowing compositions. Especially useful are the phosphate derivatives of calcium and magnesium, preferably monocalcium phosphate but without excluding the use of other phosphate salts of calcium or magnesium as carriers, including such calcium or magnesium-containing compounds (that can be precursors for phosphate derivates) as mentioned above and in the examples.

According to the present invention, the addition of a phosphate derivative of an alkaline earth compound from the group of calcium and magnesium, preferably monocalcium phosphate, to phosphoric acid results in a substantially dry, pourable powder or fine granules, free of discolouration after the proper dehydrating procedure. Alternatively, the alkaline earth phosphate may be created in place of the acid.

A preferred method is to mix the ca. 85% phosphoric acid with the phosphate salt or salts as mentioned above, and possibly other acid crystals usually applied in the food industry (e.g. citric, malic, ascorbic acid, etc.) to form a homogeneous paste, then to remove the residual water by any suitable process, e.g. vacuum drying, freeze drying, etc., and to grind the dry product if necessary, preferably in a low humidity environment to give a free-flowing powder that can then be incorporated into the total formula by blending it with the other dry ingredients, e.g. sweeteners, flavours, etc. The following examples will show how liquid phosphoric acid can be prepared in the form of a dry acidulant. It is not intended, however, to limit the procedures for the preparation, as there are many more possibilities to react a calcium or magnesium compound with phosphoric acid to prepare the latter in free-flowing and substantially dry form.

<div align="center">Example 1</div>

The following ingredients were mixed in a 10 mL beaker in the sequence indicated, with thorough mixing especially after the second and the last addition:

| | |
|---|---|
| $H_3PO_4$ (86.3%) | 0.172 g |
| $CaH_4(PO_4)_2 \cdot H_2O$ | 0.25 g |
| Malic acid | 0.60 g |
| Ascorbic acid | 0.10 g |
| Citric acid | 1.70 g |

The beaker was placed in a vacuum oven heated to $52^{O}C$ and vacuum was applied until the absolute pressure reached 29 mm. After one hour air was admitted and the beaker removed. The contents were dry, free-flowing, and colourless.

<div align="center">Example 2</div>

Phosphoric acid is mixed with monocalcium phosphate (m.c.p.) having phosphate content about twice that of the acid, or m.c.p.:acid ratio of about 2.57 by weight. The paste is vacuum-dried and mixed with a dry cola flavour, and the resulting powder may be stored in dry conditions, with added sugar or with a non-caloric sweetener, to be used with carbonated water for preparation of an "instant" cola drink. The beverage (sweetened form) is fresh-tasting and free of salty or other off-taste.

<div align="center">Example 3</div>

Fifty grams of $CaHPO_4$ (dibasic calcium phosphate) is mixed with 100 g $H_3PO_4$ (phosphoric acid 86.3%). The resulting paste is freeze-dried and then comminuted. Aliquot parts are used to form a blend with dry cola flavour and natural as well as artificial sweeteners. Every variety of the blends mentioned will give a refreshing, satisfactory cola drink when mixed with club soda.

### Example 4

103.4 grams of $Ca_3P_2O_8$ (tricalcium phosphate) is triturated with 312.2 g $H_3PO_4$ (86.3%) and the material is vacuum dried and ground. Adequate portions may be used as an acidulant in a dry beverage blend. The blend will dissolve quickly resulting in a refreshing drink.

### Example 5

One hundred grams of $CaCO_3$ is added in small portions to 388 g $H_3PO_4$ with constant stirring. After no more bubbling occurs, the homogeneous paste is dried and comminuted in a dry state. Adequate portions may be used as part of a blend of an instant drink as acidulant.

### Example 6

One hundred grams of $Ca_3(C_6H_5O_7)2$ (calcium citrate) is mixed with 234 g $H_3PO_4$ (phosphoric acid 86.3%), the paste dried and ground. Adequate portions used as an acidulant in a blend with other dry ingredients for an "instant drink" will result in refreshing carbonated drinks when mixed with carbonated water.

### Example 7

One hundred grams of $Mg_3(C_6H_5O_7)2$ (magnesium citrate) is mixed with 250 g $H_3PO_4$ (phosphoric acid 86.3%). The paste, dried and ground, may be used as acidulant similarly to the procedure used in Example 6.

### Example 8

Seventy-five grams of $MgH_4(PO_4)2$ (magnesium biphosphate) is mixed with 100 g $C_4H_6O_5$ (malic acid) and with 50 g $H_3PO_4$ (phosphoric acid 86.3%). The paste is dried and comminuted, then adequate portions of it are added as an acidulant to other dry ingredients, e.g., flavours and sweetening agents to give a refreshing "instant" carbonated drink when mixed with carbonated water.

0075429

These examples are for illustration and should not be thought of as limiting the invention. Other applications in the food industry such as, for example, an acidulant in baking powders, etc., may be considered for these compositions.

## CLAIMS

1.    A substantially dry phosphoric acid composition characterised in that it comprises orthophosphoric acid in combination with one or more compounds of calcium or magnesium or both, capable of forming corresponding phosphates, the orthophosphoric acid constituting no more than 75% by weight of the composition.

2.    A composition according to claim 1 comprising orthophosphoric acid in combination with a calcium phosphate.

3.    A composition according to claim 1 comprising orthophosphoric acid in combination with a magnesium phosphate.

4.    A composition according to claim 1 comprising orthophosphoric acid in combination with calcium and magnesium phosphates.

5.    A composition according to any of claims 1 to 4 containing additionally at least one physiologically acceptable organic acid.

6.    A composition according to any of claims 1 to 5 which is comminuted.

7.    A composition according to any of claims 1 to 6 additionally containing beverage flavour and sweetener.

8.    A method of producing a substabtially dry phosphoric acid composition according to any preceding claim characterised by mixing the ingredients defined in such claim and removing sufficient water that the composition behaves as though dry.

0075429

9.    A method of producing a beverage characterised by the addition of a composition according to any of claims 1 to 7 to water.